# EUROPEAN PATENT APPLICATION

(11) **EP 1 645 356 A1**
(43) Date of publication of application: **12.04.2006**
(21) Application number: 05255629.7
(22) Date of filing: 14.09.2005
(51) Int. Cl.: B23K 35/32

(54) **Welding of vessel internals with noble metal technology**

(30) Priority: 23.09.2004 US 947535
(71) Applicant: GENERAL ELECTRIC COMPANY, Schenectady, NY 12345 (US)
(72) Inventor: Pao, Hsueh-Wen, Saratoga California 95070 (US); Offer, Henry P., Los Gatos California 95033 (US); Sandusky, David Wesley, Los Gatos California 95030 (US)
(74) Representative: Pedder, James Cuthbert

(57) **Abstract**

Method of joining a first metal to a surface of a second metal at a region susceptible to stress corrosion cracking, comprising applying an SCC-resistant Noble Metal weld Buttering or Noble Metal weld Cladding to said first metal prior adjacent to said region prior to welding said first metal to said surface of said second metal. Alternately, a method of applying Noble Metal Cladding over existing SCC susceptible weld deposits and/or heat affected zones. A metal component containing a Noble Metal weld Cladding or Buttering over existing SCC susceptible weld deposits and/or heat affected zones.

## Description

The invention relates to the welding of joints with improved resistance to stress corrosion cracking. In particular, the invention relates to the welding of joints on steel internal components and internal surfaces of nuclear reactors using SCC resistant Noble Metal-containing Buttering or Noble Metal Cladding, which components are susceptible to stress corrosion cracking in heat affected zones or in cold-worked areas adjacent to a weld joint. Further, the invention relates to a method of applying Noble Metal Cladding over existing SCC susceptible weld deposits and/or heat-affected zones.

A nuclear reactor contains a core of fissionable fuel which generates heat during fission. The heat is removed from the fuel core by the reactor coolant, i.e., water, which is contained in a reactor pressure vessel. Piping circuits carry the heated water or steam to the steam generators or turbines and carry circulated water or feed water back to the vessel. Operating pressures and temperatures for the reactor pressure vessel are about 7 MPa and 288°C for a boiling water reactor (BWR), and about 15 MPa and 320 °C for a pressurized water reactor (PWR). The materials employed in both BWRs and PWRs must withstand various loading, environmental and radiation conditions. As used herein, the term "high-temperature water" means water having a temperature of about 150°C or greater, steam, or the condensate thereof.

Materials exposed to high-temperature water include, for example, carbon steel, alloy steel, stainless steel, and nickel-based, cobalt-based and zirconium-based alloys. Despite careful selection and treatment of these materials for use in water reactors, corrosion occurs on the materials exposed to the high-temperature water. Such corrosion contributes to a variety of problems, e.g., stress corrosion cracking (SCC), crevice corrosion, erosion corrosion, sticking of pressure relief valves and build-up of the gamma radiation-emitting Co-60 isotope.

Stress corrosion cracking (SCC) has been a problem affecting the operational availability of boiling water reactor (BWR) power plants for a number of decades. The problem arises when a combination of sensitized or cold-worked base material, tensile stresses, and high-temperature oxygenated water exists during service. One common form of sensitization is caused by the thermal cycle of welding, where the weld bead cooling sequence is sufficiently slow to allow precipitation of chromium carbides at the microstructural grain boundaries. This precipitation of carbides depletes the adjacent grain boundary regions of chromium to an extent that they are no longer corrosion resistant. Hence, SCC can occur at these boundaries in otherwise corrosion-resistant materials when in the presence of a chemically aggressive water environment and a sufficiently high surface tensile stress. Heavily cold-worked material surfaces are also susceptible to SCC when in the presence of tensile stress and a chemically aggressive water environment.

Many of the older reactor plants were inadvertently constructed with higher carbon stainless steel, which was thermally sensitized during fabrication heat treatment or weld joining processes. In addition, the welding practices typically used high heat inputs which were sufficient to lead to tensile residual stresses and the corresponding SCC failures. These high welding heat inputs additionally compounded the problem by diluting the corrosion-resisting alloying elements (such as chromium) below their effective level. Further, the welding filler materials were not always high in Delta Ferrite microstructure forming alloying elements to impart sufficient SCC resistance. Other components were heavily machined or deformed during fabrication (after final solution annealing), resulting in a surface cold-worked condition also susceptible to SCC. Welding was performed either before or after the cold work was generated, leaving the adjacent area in a state of tensile residual stress.

Repair or replacement of these components is generally very expensive due to the fact that operating plants must be shut down for longer outages to perform major replacements, and due to the high levels of radioactive contamination on the internal surfaces (or activation within the volume) of the plant components.

Past efforts to develop corrosion-resistant weld cladding to be deposited over sensitized regions were designed for use on the inside of fluid process piping, typically of about 4-inch nominal diameter or greater. For these sizes, multiple, thick layers applied with conventional levels of heat input were possible to compensate for dilution of the deposit chromium content by the base material, since their total layer thickness was not critical.

A number of solutions to the problem of SCC have been proposed over the years, including component material replacement, residual stress reduction, improved machining and forming practices, and water chemistry controls (or combinations of these proposals). Another approach is to electric arc weld clad over a previously sensitized region, effectively isolating it from the aggressive water environment. However, this existing method typically does not have universal applicability, since for highly susceptible substrates, existing welding methods can sensitize the edges of the newly clad region, and existing cladding materials may have inadequate SCC resistance. The net effect is to cover an older SCC problem, which only generates the risk of a similar new problem nearby. Due to the typically high heat input of conventional cladding processes, the edges of the newly clad regions may also be put into an adverse state of high surface tensile stress. In addition, these conventional methods may lead to distortion of the component being clad, thereby adversely affecting the fit and/or function of interfacing components.

A further approach is laser fusion of a pre-applied, corrosion-resistant paste applied over an SCC-susceptible region. However, this process is tedious and highly complex, and very expensive especially when applied remotely to in-vessel components.

Another known process is Gas Tungsten Arc (GTA) fusion of a preplaced sleeve made of corrosion-resistant material. This process, however, is considered limited to applications having a geometrically regular surface shape (such as cylindrical) to which the sleeve can be readily preshaped for adequately tight fit.

Many sensitized areas needing to be clad are the heat-affected zones (HAZs) of joining welds, which rarely have regular or smooth surfaces. Other adverse material conditions such as furnace-sensitized, irradiation-sensitized, or cold-worked materials are also in need of a corrosion-resistant cladding to prevent SCC

Fusion weld deposits of certain austenitic-microstructure stainless steels or nickel alloys and their adjacent HAZs are known to be susceptible to stress-corrosion cracking failure when exposed to a high-temperature oxygenated water environment, as exists in a boiling water reactor (BWR) during plant operation. (In the context used herein, the term "fusion weld/welding" means any weld or welding process where some portion of the base metal of filler metal, if used, is melted). Existing methods to prevent or repair SCC include selection of a commercial welding alloy to prevent the conventional weld joint itself from failing, capping the final layer of the conventional weld joint with a commercial grade of SCC-resistant alloy, weld cladding the HAZs produced by the conventional weld joint itself with a commercial grade alloy, and rewelding a portion of a weld joint containing a commercial grade alloy, a cladding, or an unwelded substrate where cracking or other defects have been removed. All of these methods, and variations thereof, leave a displaced heat-affected zone at the edges of the joint (or at the edges of the extended weld cap/cladding) which remains exposed to the aggressive water environment when in service, and therefore still leaves the displaced HAZ susceptible to SCC. In addition, the newly deposited weld material itself may not have sufficient SCC resistance to prevent cracking in long-term service, especially in regions of high Electro-Chemical Potential (ECP) or high neutron flux, and especially at the weld edge beads where the commercial alloy is more diluted by the base material composition. Often, SCC and other defects may be found on vessel internal component surfaces or piping during the plant life. Such defects may grow to an unacceptable condition for continued plant operation without repair or replacement of the affected components.

A need exists for a way of positively preventing SCC in vessel internal replacement, vessel internal repair work, piping repair and replacement work, and field welding joint design of new construction or component replacement projects. A method is needed which will not just temporarily displace the problem area, or insufficiently reduce the magnitude of the problem, or cover the problem area with a material that must be applied with excessively thick, or damagingly hot, multiple layers. The present invention seeks to satisfy that need.

The invention provides a solution to the problem of stress-corrosion cracking (SCC) of welded joints in boiling water reactors, regardless of whether the cracking is due to dilution of the weld filler material, thermal sensitization during fabrication, cold work during fabrication, high tensile residual stresses, neutron irradiation during service, or combinations thereof.

According to one aspect of the invention, there is provided a method of joining metals together wherein a SCC-resistant noble metal-containing buttering is placed on a SCC-susceptible weld joint edge and nearby surface prior to welding of the joint.

According to another aspect of the invention, there is provided a method of joining metals together wherein a SCC resistant noble metal cladding is placed at or adjacent a weld joint edge and nearby surface prior to welding of the joint.

According to yet another aspect of the invention, there is provided a metal component welded according to the present method.

The invention will now be described in greater detail, by way of example, with reference to the drawings, in which:-
Figures 1 A and 1 B show sample weld preparations for a tubular or plate weld joint;
Figure 1C shows sample weld preparations for a tubular weld joint;
Figures 2A and 2B show respectively an existing shroud to shroud-support weld joint and a weld joint produced using the method of the invention;
Figures 3A, 3B and 3C show respectively an existing jet pump diffuser to baffle plate weld joint and a weld joint produced using the method of the invention;
Figures 4A, 4B and 4C show application to a jet pump diffuser to baffle plate weld joint;
Figure 5A shows an existing weld joint for a jet pump thermal sleeve;
Figures 5B and 5C show application to jet pump thermal sleeve welds according to the invention;
Figure 6A shows an existing weld joint for a ICM guide tube to ICM housing and Figure 6B shows application to a ICM guide tube to ICM housing according to the invention;
Figure 7A shows an existing weld joint for a jet pump riser-brace vessel pad, and Figure 7B shows application to a jet pump riser-brace vessel pad according to the invention.

In one embodiment, the method of the invention uses a filler material comprised of nickel-base alloys or iron-base stainless steels such as Nickel-base Alloy 82, Alloy 52, Alloy 52M, Stainless 308L, Stainless 309L, or Stainless 316L, and a low concentration of a noble metal element (e.g., palladium, platinum, rhodium, or combinations thereof) to act as a catalyst for improved recombination rates of oxygen with hydrogen. The concentration of noble metal in the filler material is typically in the region of about 1 % by weight or less, more usually about 0.25 to 0.75% by weight after dilution by base metal. Recombination of the oxygen and hydrogen peroxide with hydrogen reduces the effective electrochemical potential, in order to reduce or eliminate the susceptibility to SCC. The filler material is applied to the SCC-susceptible base material (or a remnant of previously-deposited SCC-susceptible filler or butter material) as a weld preparation edge noble metal butter or a surface cladding. This method ensures that the weld joint base and filler metals become significantly more tolerant of adverse fabrication and welding practices that would otherwise lead to susceptibility to SCC.

In a preferred embodiment, the reduced cladding heat input of the disclosed method is produced in part by a travel speed (torch speed) in excess of about 10 inches per minute, for example 15 to 45 inches per minute, more usually 15-30 inches per minute, so that the time in the sensitizing temperature range during weld cooling is insufficient to allow carbides to precipitate on the grain boundaries to the extent that the chromium content is depleted. This low heat input also significantly reduces the dilution of the weld filler by the base material such that even one thin weld layer, with the benefit of a small noble metal addition in the filler (and excess hydrogen in the water to which it is exposed in service), is sufficient to provide a deposited composition that is adequately resistant to SCC.

This new method of sensitization control is in contrast to the conventional method of heat input control and minimization, where the heating rate (and therefore cooling rate) of the process and the time constant of the material are not individually taken into account, but only the integrated heat input. The present invention utilizes a dual control on the welding parameters: (1) heat input (controlled as a function of the heat input per unit length of bead), and (2) HAZ cooling rate (controlled as a function of the welding linear speed in the forward direction). Preferably, cross-bead arc oscillation is avoided, since it is counterproductive with respect to maintaining both the required low heat input and high travel speed. The method therefore allows electric-arc and other fusion-based cladding processes to be applied on materials even with very low resistance to thermal sensitization without high risk of sensitization.

In the conventional cladding approach, heat input is simply calculated as the product of the arc amperage times the arc voltage, divided by the arc travel speed. The heating rate and cooling rate are, however, inherently related to each other by virtue of the torch travel speed and the material thermal properties. Therefore, at sufficiently high travel speeds, the cooling rate can be controlled by selecting a predetermined critical travel speed related to the critical cooling rate for thermal sensitization (chromium carbide precipitation) to occur in a specific material. The critical cooling rate for a selected austenitic material depends primarily on its grain size, carbon content, chromium content, Delta Ferrite content, thermal diffusivity and section thickness. It was discovered that the preferred heat input for the process in austenitic microstructure alloys is less than about 3.8 kJ/inch (1.5 kJoule/cm), more usually about 1.2 to 2.5 kJ/inch (0.5 to 1.0 kJoule/cm). The corresponding preferred torch minimum speed is therefore greater than approximately 20 inch/min. (50 cm/min.), typically 25 to 35 inch/min. (60 to 90 cm/min).

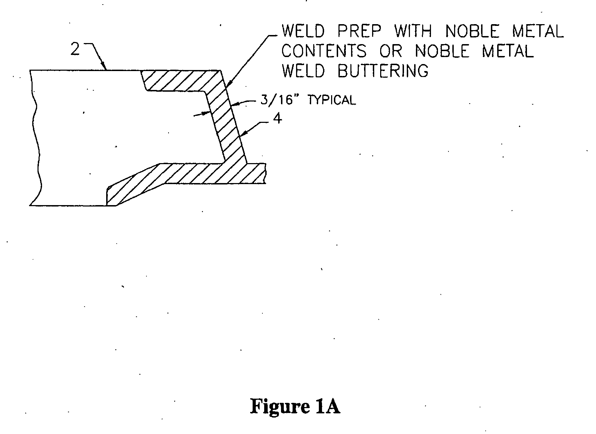

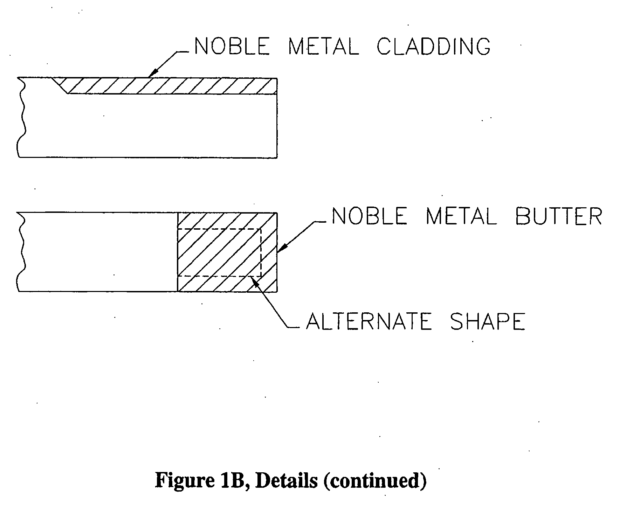

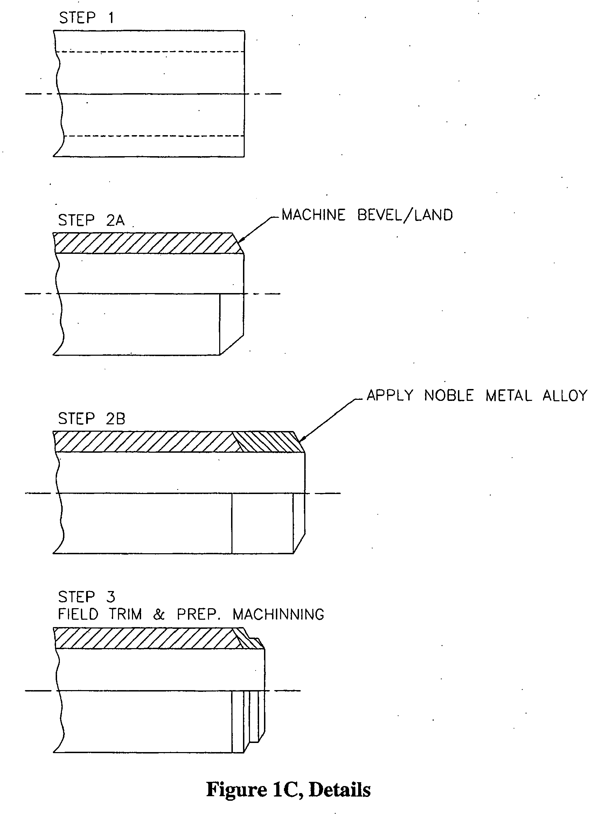

Referring to Figures 1A and 1B, there is shown a component 2 with SCC noble metal weld cladding 4 "buttered" onto the edge of the joint to be welded. In Figure 1C, there is shown the step methodology including machining a bevel, applying a noble metal alloy and further trimming and machining.

The noble metal weld cladding is applied onto the surface to be joined, including the portion to be contained within the joint as well as the adjacent edges of this area. The buttering is applied with sufficiently low heat input to prevent thermal sensitization of the SCC-susceptible substrate during its application. The adjacent areas beyond the joint edges are also buttered so that the joining weld can subsequently be made with sufficiently increased heat input (relative to that of the butter layers), without thermally sensitizing the original material underneath the butter, and so that the perimeter location of the joining weld can vary without risk of the higher heat weld being inadvertently deposited on the un-buttered area.

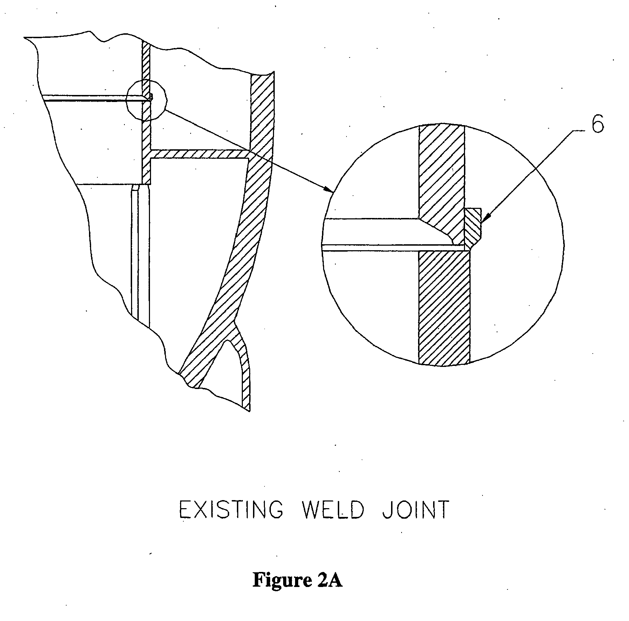

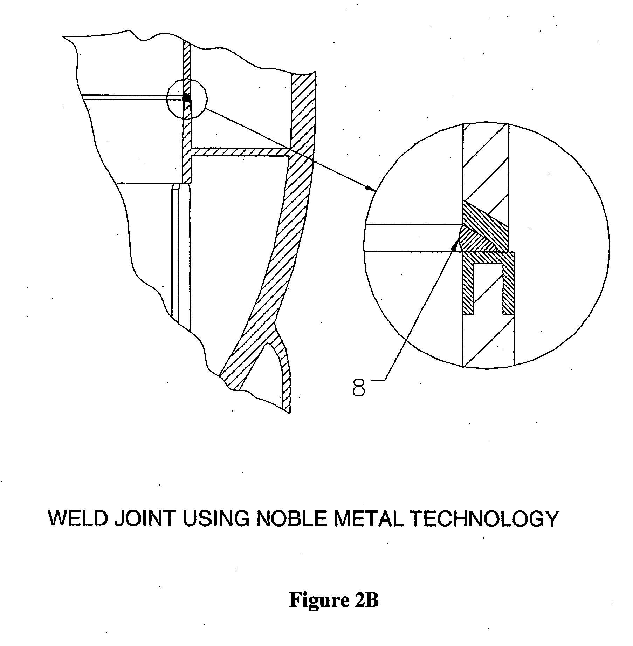

Figure 2A shows an existing shroud to shroud-support weld joint 6. Figure 2B shows a joint 8 produced according to the present method using SCC noble metal containing cladding. In Figure 2A, there is shown the conventional method of joining a vessel shroud to a shroud support without the use of butter on the susceptible material surfaces to be joined. Figure 2B shows an improved joint design between these components with the low heat-input noble metal alloyed cladding that is preplaced on each surface to be joined.

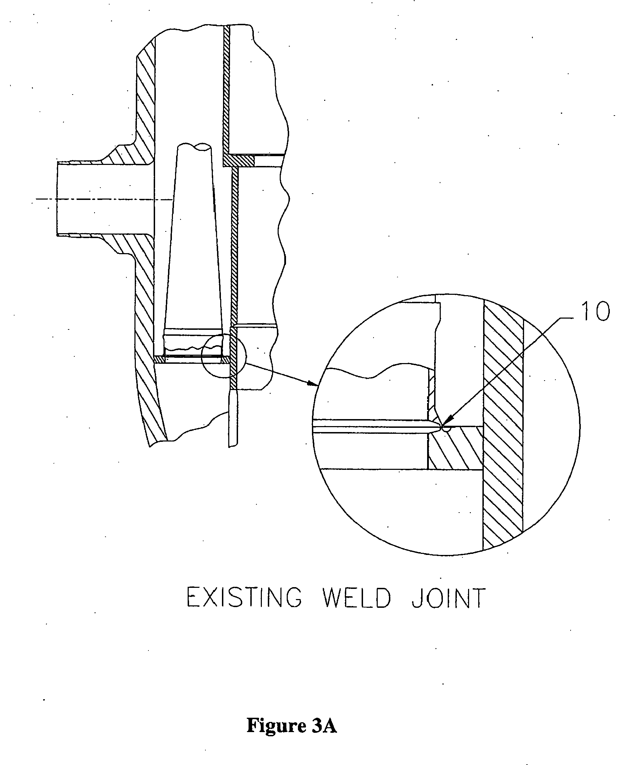

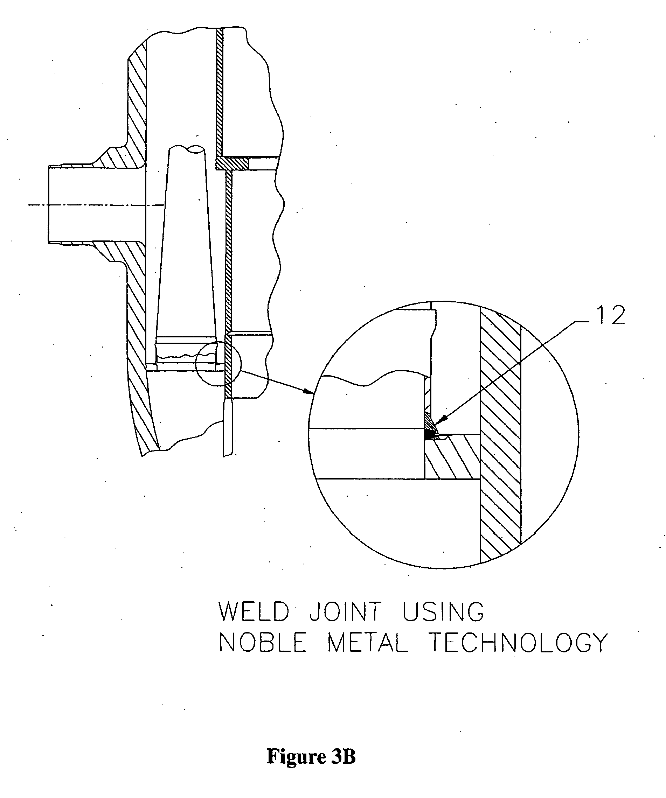

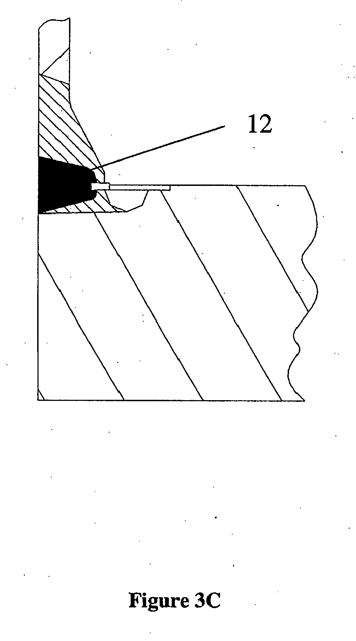

Figure 3A shows another form of existing weld joint 10, a jet pump diffuser and its supporting baffle plate. Figures 3B and 3C show the same components joined using noble metal alloyed cladding, applied in a similar "butter" manner as shown for the vessel shroud to shroud support weld.

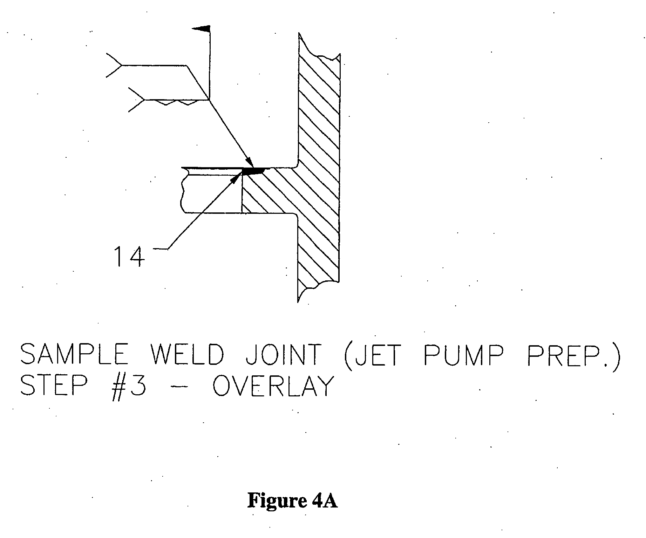

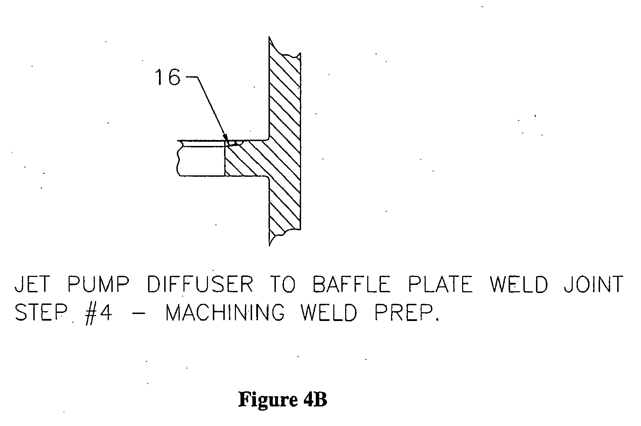

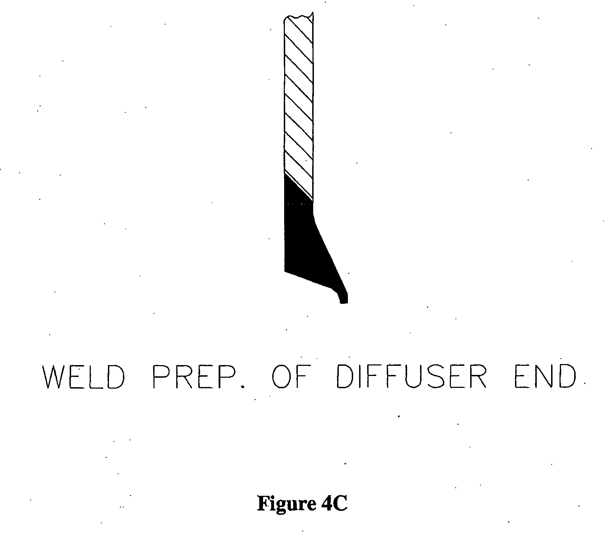

Figure 4A shows a jet pump diffuser to a baffle weld joint with an overlay 14. Figure 4B shows the final machined configuration of a machining weld preparation 16 in the noble metal alloyed butter. Figure 4C shows a weld preparation of a diffuser end utilizing the method of the invention.

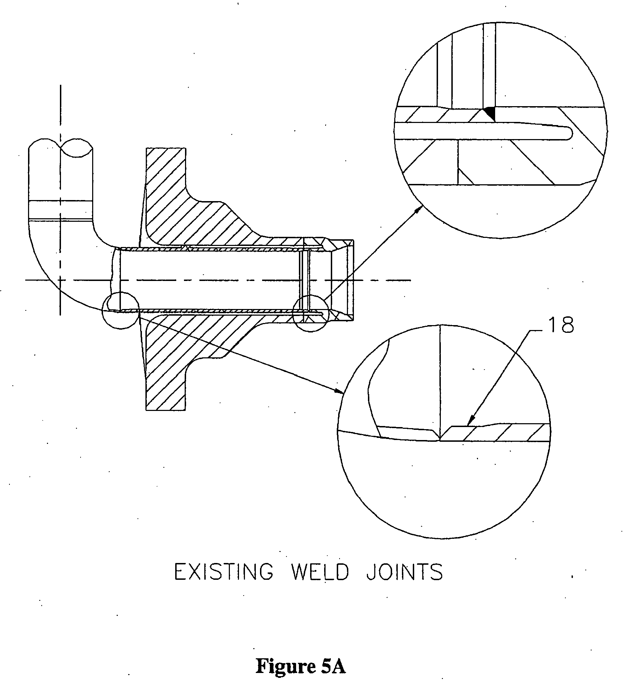

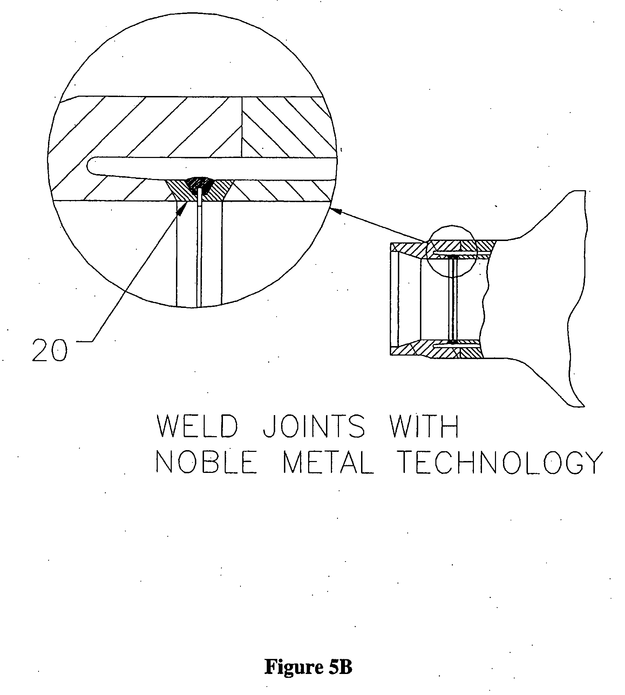

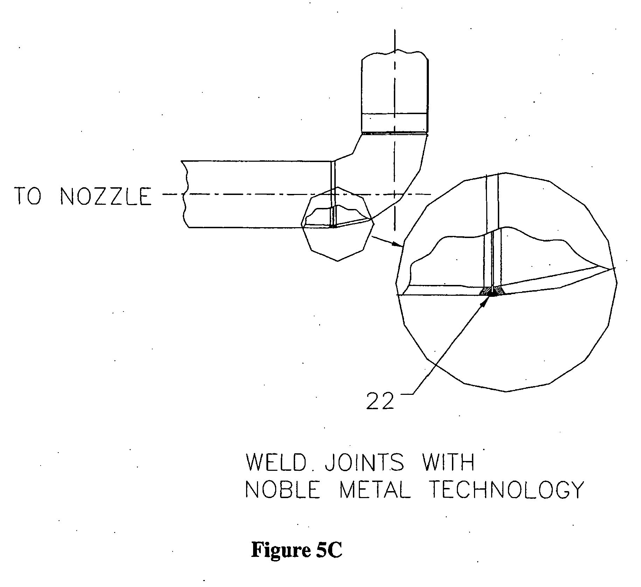

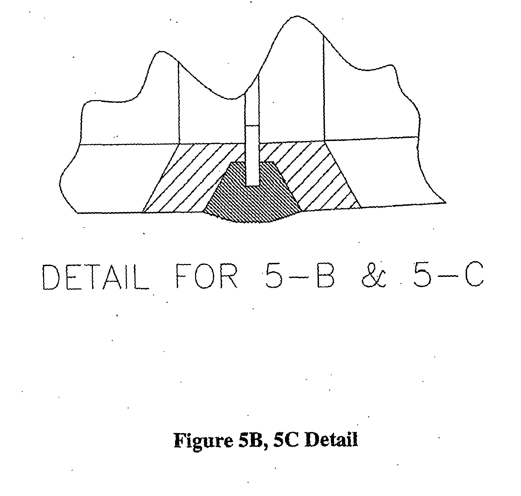

Figure 5A shows an existing jet pump thermal sleeve weld joint 18. Figures 5B and 5C show two jet pump thermal sleeve weld joints 20, 22 produced according to the present method. More specifically, Figure 5A shows the joint details for the recirculation inlet pipe to elbow weld (18) and the thermal sleeve to nozzle-to-safe-end weld in both a partial-penetration fillet weld variation, and a "tuning fork" full-penetration weld variation in Figure 5B (20). The technically preferred design is the tuning fork geometry with each side of the weld preparation buttered with noble metal alloyed cladding. The other end of the safe-end where it is joined to the jet pump recirculation piping is shown with Noble Metal alloyed Cladding and Noble Metal alloyed filler in Figure 5C.

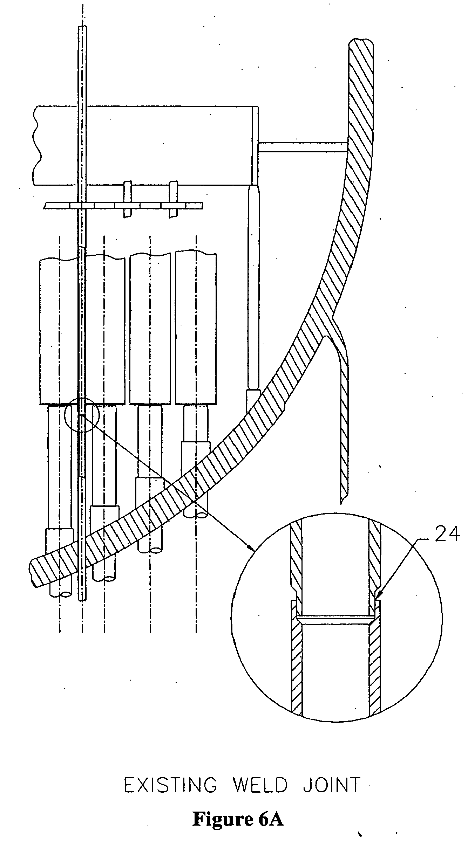

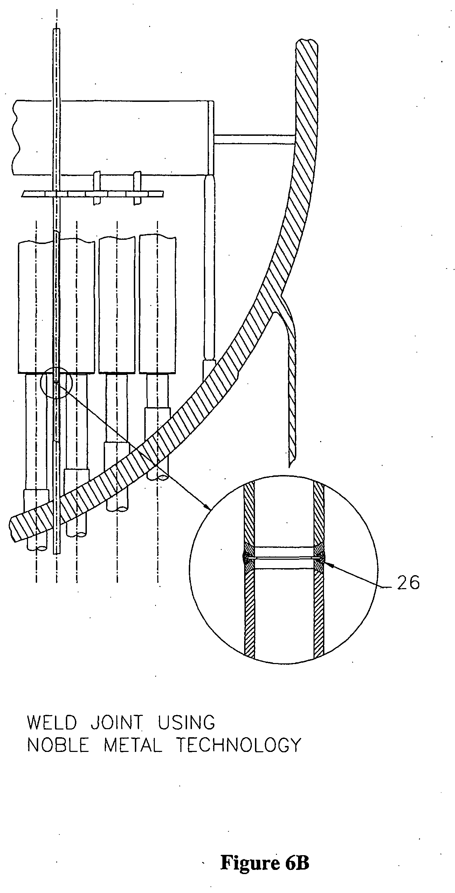

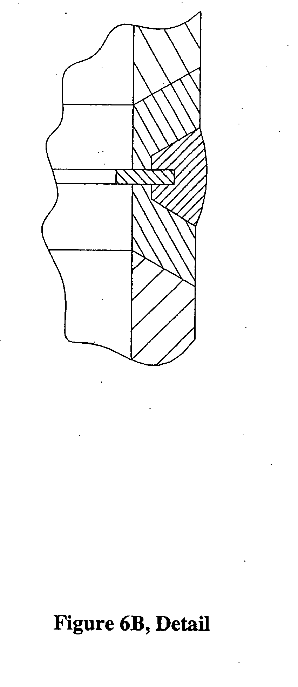

Figure 6A shows an existing ICM guide tube to ICM housing weld joint 24. Figure 6B shows an ICM guide tube to ICM housing weld joint 26 produced according to the present method. More specifically, Figure 6A shows a standard (un-buttered) partial penetration socket-weld weld joint detail for the ICM housing to guide tube. Figure 6B shows the completed full penetration butt-joint detail using Noble Metal alloy Buttered weld joint preparations (26).

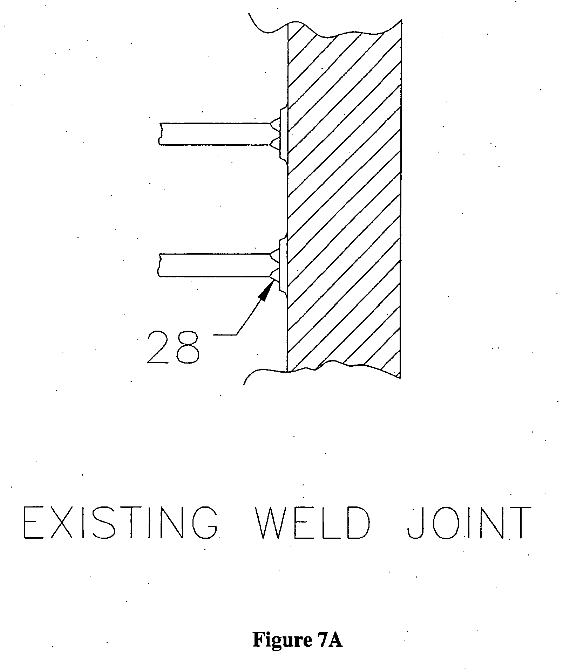

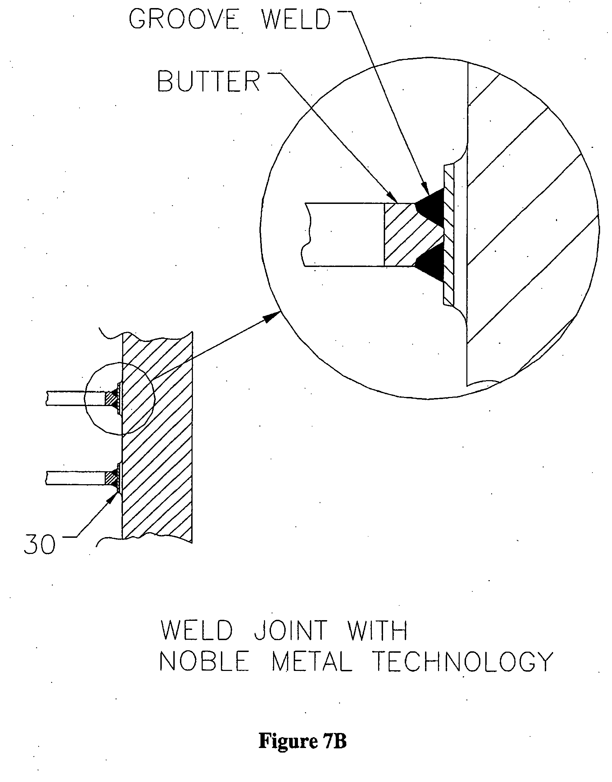

Figure 7A shows an existing weld joint 28 for a jet pump riser-brace vessel pad. Figure 7B shows a weld joint 30 for a jet pump riser-brace vessel pad produced according to the present invention. More specifically, Figure 7A shows the standard (un-buttered) double-sided, full-penetration jet pump riser-brace weld pad, which is attached to the cladding of the pressure vessel (28). Figure 7B shows a riser brace welded to a Noble Metal alloy Buttered buildup pad, also completed using a double-sided, full-penetration weld joint (30) with either one or both sides of the joint having the Noble Metal alloy Buttering (depending on whether one or both sides are susceptible to SCC).ln addition to the benefits described above, the low heat input of the disclosed method also results in a significant reduction in the magnitude and extent of the residual stresses in the metal substrate, compared to conventional cladding using arc or other fusion welding processes. For stainless steel cladding, the NM Cladding (or Buttering) process also provides a superior microstructure for SCC resistance due to the extremely fine Delta Ferrite grain size and morphology produced, which also result from the high process speed and corresponding low heat input. Other benefits are reduced potential for thermal sensitization, reduction of tensile residual stresses, generation of an improved cladding microstructure, and generation of a unique electrochemically-enhanced surface. These benefits enable Noble Metal Cladding to ensure that SCC will not or is very unlikely to occur, even when conventional (higher heat input) welding processes are used to join or subsequently repair the substrates.

For components which have already been fabricated and installed, isolating an existing thermally-sensitized or highly-stressed HAZ from an aggressive service environment utilizing an Noble Metal Cladding provides the long-term benefit of increased SCC mitigation in a similar manner to a pre-placed Noble Metal Cladding, even though the process may need to be applied in place. In-place application may require alternate tooling to clear access restrictions or to address unfavorable welding positions, so the preferred sequence for Noble Metal Cladding application is before component installation, whether performed for new or replacement construction.

For components with defects such as SCC present in either the weld itself, or adjacent to, or regions away from welds, the defects may be sealed from the aggressive environment by application of one or more layers of Noble Metal Cladding. As desired, existing defects may also be mechanically excavated and the excavation filled (repair welded) with Noble Metal Cladding.

Examples of applications to which the present invention is applicable are:
(1) repair and construction of vessel internal surfaces;
(2) repair and construction for Jet Pump Diffusers where weld preparation is built up on the baffle plate with the Noble Metal SCC resistant Cladding, which improves the ECP value for future protection with hydrogen water chemistry;.
(3) application of SCC resistant noble metal weld overlay to highly stressed weld joints or heat affected zones to minimize the occurrence of SCC and the need for potential internal component replacement;
(4) application of SCC resistant Noble Metal alloy to weld preparations (similar to Ni-Cr-Fe Alloy pre-Buttering technique) for field construction of new reactor units;
(5) replacement of vessel internals in BWR's, where the weld joints were previously completed with the traditional welding technique without using of special welding material with Noble Metal content. In order to develop the potential to protect the highly stressed field weld joint from SCC/IGSCC, welding material with Noble Metal content can be applied easily with the existing welding technology. The outside weld metal surface as well as the heat affected zone with Noble Metal content have the potential to reduce the ECP during plant operation with hydrogen water technology applied;
(6) local repair of the vessel clad components by grinding to remove the defect may reach a condition that any welding to the cladding surface may require preheat and postweld heat treatment. This is a very inconvenient process for preheat and postweld heat of the thick metal of vessel internals. According to the present invention, it is possible for the repair technique to stop the defect from growing, such as with a mechanical plug or hole cracking stopper, and application of weld metal overlay with Noble Metal content. With hydrogen water chemistry applied during plant operation, the potential of SCC/IGSCC of the repaired area is significantly minimized;
(7) for new construction, the weld preparation design for field welds can be processed with Noble Metal quality such as similar to the Ni-Cr-Fe Alloy weld Buttering for the existing designs. The potential for SCC/IGSCC of the field weld joint is minimized significantly with this approach.

### EXAMPLES

Examples of the method as applied to specific structural configurations will now be described.

### (1) Weld Joint Configuration

A weld overlay with Noble Metal welding material is applied to a weld preparation of reactor components for field welds. The reactor components are stress relieved, if required, for field installation. The field weld is performed with welding material with Noble Metal content on the root pass and/or final covering pass, if they are exposed to the reactor coolant during service. A consumable insert, if used, may have Noble Metal content as welding material. Alternately, the entire weld thickness can be completed with Noble Metal-containing filler metal. This can be applied to both of stainless steel or Nickel alloy, as applicable.

This process can be applied to both of stainless steel or Ni-Cr-Fe alloy steel, as appropriate.

Application of Hydrogen Water Chemistry

Hydrogen water chemistry is a technology used to improve the efficiency of mitigating SCC by adding hydrogen to develop a predetermined hydrogen content to the plant coolant water. Noble Metal is used as a chemical catalyst to accelerate the kinetics of the recombination of excess oxygen with the added hydrogen, in order to reduce the oxygen (generated by neutron decomposition of the coolant water) to a sufficiently low level that SCC cannot occur. The noble metal may be added in various forms, including as a pre-deposited weld Cladding or Buttering on the SCC-susceptible weld joint edges.

### (2) Weld Repair Technique For Vessel Internals Using Buttering or Cladding With Stainless Steel Or Ni-Cr-Fe Alloy Steel.

The defect shape and location are typically located using ultrasound techniques. The indication is removed if no weld repair is required. The developed cavity may be left as is with acceptable surface geometry. If this excavation will affect the low alloy steel base metal or corrosion resistant alloy metal and require weld repair, then Stop Holes may be drilled to cover both ends of the defect to stop the defect from growing. The holes are plugged with filler pins with Noble Metal content. A thin weld Noble Metal Cladding is applied to seal the defect from the reactor coolant during service with weld material having Noble Metal content.

### (3) Shroud Replacement or New Vessel internals Construction,. includes but is not limited to:

1 Jet Pump riser elbow to Thermal Sleeve welds;
2 Jet Pump riser elbow to Riser pipe welds;
3 Jet Pump Riser Brace Vessel Pad welds;
4 Shroud to Shroud-Support welds;
5 Thermal Sleeve to Safe End welds;
6 Diffuser to Shroud Baffle Plate welds;
7 ICM Guide Tube to ICH Housing welds;
8 Field assembly weld joint between the upper Shroud and lower Shroud;
9 Nozzle Safe End to Nozzle welds; and
10 Shroud Baffle Plate Preparation for Jet Pump installation;

### (4) Other Weld Joint Configurations

Hydrogen Water Chemistry is applied, as discussed above.

Weld Prep with Noble Metal Contents or Noble Metal Weld Cladding/Buttering.

Rather than broadly covering the face surface of a component adjacent to a weld joint with a Noble Metal weld deposit, referred to herein as Cladding, it is possible to cover only the edges and a lesser portion of the face(s) with Noble Metal weld deposit. This alternate method is referred to herein as "Buttering".

Piping and component welds outboard of the vessel nozzle to safe-end welds.

In addition to Noble Metal Cladding or Buttering the SCC-sensitive portions of vessel internals, the weld joints and other critical areas of the coolant piping and associated components may also be protected with a Noble Metal weld deposit to obtain similar SCC mitigation benefits.

The present invention can be applied to any components subject to SCC where sufficient hydrogen is present. Examples of locations where the invention may be applied are:
Vessel Internal Surface Weld Cladding;
Replacement Parts or Components for New Construction;
Jet Pump Riser Brace Pad Weld;
Shroud to Shroud Support Weld Joint;
Stub Tube to Bottom Head Weld Joint;
Shroud Support to Vessel Wall Weld Joint;
Thermal Sleeve to Jet Pump Elbow Weld Joint;
Thermal Sleeve to Nozzle Safe End Weld;
Jet Pump Diffuser To Baffle Plate Weld Joint;
ICM Guide Tube to ICM Housing Weld Joint;
Jet Pump Riser Brace Vessel Pad Weld Joint;

The present invention enjoys several advantages. First, the elevated temperature fields and corresponding potential for thermal sensitization are transferred from the structural weld deposit and its heat-affected zone to the noble metal Cladding or Buttering. Secondly, the higher tensile residual stress fields resulting from completion of the joint from the SCC-susceptible base metal are relocated to the SCC-resistant Noble Metal Cladding. Thirdly, the SCC resistance of the final exposed surfaces of the weld joint and its HAZ is improved due to the Noble Metal Cladding's catalytic reduction of the electrochemical corrosion potential (ECP). The Noble Metal Cladding technology of the present invention catalytically enhances a reduction of the ECP of a susceptible substrate surface in the presence of a controlled hydrogen-containing water environment, so that less added hydrogen is required to combine with and efficiently nullify the corrosive effects of the available oxygen and hydrogen peroxide. This benefit is best achieved when the Noble Metal Cladding is pre-placed on the substrate weld area, before the structural weld joint is completed. If a weld joint has already been completed, significant benefits still may be achieved by mitigating or repairing the old weld joint filler material and/or the HAZ of the old joint. These benefits include, for example, isolation of the highly stressed or sensitized surface of the lower SCC-resistance existing weld metal and its heat-affected zone (HAZ) from exposure to the aggressive water environment, structural reinforcement of areas thinned by defect removal with a Noble Metal alloyed weld deposit having increased SCC resistance, and addition to or replacement of existing conventional corrosion-resistant cladding (CRC) with a Noble Metal alloyed weld Cladding having increased SCC resistance.

The benefits of Noble Metal Cladding for both new welded construction and existing structures provide a significant increase in the efficiency and effectiveness of Noble Metal technology, in that the local areas needing the greatest margin against SCC (due to inherently localized weld sensitization, tensile stresses, etc.) are provided with the best known mitigation. Prior or subsequent mitigation of larger or total surface areas, such as by Noble Metal thermal spray coating of a component, or Noble Metal chemical addition to the water environment, is still of benefit when applied after local Noble Metal Cladding.

With the present Noble Metal Cladding and hydrogen water technology, the Electrochemical Potential (ECP) can be lowered to stop or minimize IGSCC.

## Claims

1. A method of joining a first metal to a surface of a second metal at a region susceptible to stress corrosion cracking, comprising applying an SCC resistant Noble Metal Cladding (4) to said first metal at or adjacent said region prior to welding said first metal to said surface of said second metal.

2. A method according to claim 1 wherein said first and second metals are provided internally of a nuclear reactor.

3. A method according to claim 1 wherein said welding is carried out using a filler material.

4. A method according to claim 3 wherein said filler material comprises a Noble Metal.

5. A method according to claim 4 wherein said Noble Metal is selected from the group consisting of palladium, platinum, rhodium and combinations thereof.

6. A method according to claim 5 wherein said Noble Metal is present in said filler material in an amount of approximately 1% by weight or less.

7. A method according to claim 6 wherein said noble metal is present in said filler material an amount of about 0.25 to 0.75 % by weight.

8. A method according to claim 1 wherein said welding is carried out over a sufficiently short period of time to form a fine microstructure of Delta Ferrite in primarily austenitic stainless steel alloys.

9. A method of joining a first metal to a surface of a second metal at a region susceptible to stress corrosion cracking, comprising applying a Noble Metal-containing surface Cladding to said metal prior to welding the metals together.

10. A method of joining a first metal to a surface of a second metal at a region susceptible to stress corrosion cracking, comprising applying a Noble Metal-containing edge Buttering to said metal prior to welding the metals together.
